(19) Europäisches Patentamt
European Patent Office
Office européen des brevets

(11) **EP 4 257 649 A1**

(12) **EUROPEAN PATENT APPLICATION**
published in accordance with Art. 153(4) EPC

(43) Date of publication:
**11.10.2023 Bulletin 2023/41**

(21) Application number: **21900431.4**

(22) Date of filing: **19.11.2021**

(51) International Patent Classification (IPC):
**C09J 11/08** (2006.01)   **C09J 105/00** (2006.01)
**C09J 7/38** (2018.01)

(52) Cooperative Patent Classification (CPC):
**C09J 7/38; C09J 11/08; C09J 105/00**

(86) International application number:
**PCT/JP2021/042591**

(87) International publication number:
**WO 2022/118676 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.12.2020 JP 2020199264**

(71) Applicant: **Nitto Denko Corporation**
**Ibaraki-shi**
**Osaka 567-8680 (JP)**

(72) Inventors:
• **KUMADA, Tatsuya**
**Ibaraki-shi, Osaka 567-8680 (JP)**
• **OGINO, Yoshiko**
**Ibaraki-shi, Osaka 567-8680 (JP)**
• **HARA, Yusuke**
**Ibaraki-shi, Osaka 567-8680 (JP)**
• **NAITO, Tomonari**
**Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE COMPOSITION AND ADHESIVE TAPE**

(57)     An adhesive composition contains a β-1,3-glucan derivative obtained by introducing an acyl group into β-1,3-glucan; and a terpene-based resin. An adhesive tape (1) includes an adhesive layer (3) formed from the adhesive composition.

FIG. 1

1

**Description**

TECHNICAL FIELD

The present invention relates to an adhesive composition and an adhesive tape.

BACKGROUND ART

There has been known an adhesive composition containing a β-1,3-glucan derivative obtained by introducing an acyl group into β-1,3-glucan (ref: for example, Patent Document 1 below). Since the β-1,3-glucan derivative is a polysaccharide of biological origin, the adhesive agent described in Patent Document 1 has a small environmental load as compared to conventional adhesive agents using petroleum as a raw material.

Citation List

Patent Document

Patent Document 1: Japanese Unexamined Patent Publication No. 2018-154723

SUMMARY OF THE INVENTION

PROBLEM TO BE SOLVED BY THE INVENTION

Adhesive compositions used for optical applications requiring transparency, or the like are required to have higher adhesive strength and also required to have excellent transparency.
However, the adhesive composition described in Patent Document 1 still cannot satisfy the above-described requirements.
The present invention provides an adhesive composition and an adhesive tape that have high adhesive strength and excellent transparency.

MEANS FOR SOLVING THE PROBLEM

The present invention (1) includes an adhesive composition, containing a β-1,3-glucan derivative obtained by introducing an acyl group into β-1,3-glucan; and a terpene-based resin.
The present invention (2) includes the adhesive composition described in (1), in which the terpene-based resin is at least one selected from the group consisting of terpene resin, hydride of terpene resin, and phenolic modified terpene resin.
The present invention (3) includes the adhesive composition described in (1) or (2), in which the acyl group is represented by RCO-, where R is an aliphatic hydrocarbon group having 8 or more and 14 or less carbon atoms.
The present invention (4) includes the adhesive composition described in any one of (1) to (3), in which an amount of the terpene-based resin relative to 100 parts by weight of the β-1,3-glucan derivative is 10 parts by weight or more and 100 parts by weight or less.
The present invention (5) includes an adhesive tape including an adhesive layer formed from the adhesive composition described in any one of (1) to (4).

EFFECTS OF THE INVENTION

The adhesive composition and the adhesive tape according to the present invention have high adhesive strength and excellent transparency.

BRIEF DESCRIPTION OF THE DRAWINGS

FIG. 1 is a cross-sectional view of one embodiment of an adhesive tape according to the present invention.
FIG. 2 is a cross-sectional view of another embodiment of the adhesive tape.
FIG. 3 is a cross-sectional view of another embodiment of the adhesive tape.

## DESCRIPTION OF THE EMBODIMENTS

[Adhesive composition]

The adhesive composition of the present invention contains a $\beta$-1,3-glucan derivative and a terpene-based resin.

[$\beta$-1,3-glucan derivative]

The $\beta$-1,3-glucan derivative is a base polymer in the adhesive composition. The $\beta$-1,3-glucan derivative is a partially acylated compound in which a part of a hydroxyl group in glucose in $\beta$-1,3-glucan is acylated with an acyl group. That is, the $\beta$-1,3-glucan derivative is an acyl compound in which an acyl group is incorporated into $\beta$-1,3-glucan (obtained by introducing an acyl group into $\beta$-1,3-glucan).

The acyl group is represented by RCO-. Examples of R include a hydrocarbon group. Examples of the hydrocarbon group include an aliphatic hydrocarbon group, an alicyclic hydrocarbon group, and an aromatic hydrocarbon group, and preferably, an aliphatic hydrocarbon group is used.

Examples of the aliphatic hydrocarbon group include a saturated aliphatic hydrocarbon group and an unsaturated aliphatic hydrocarbon group, and preferably, a saturated aliphatic hydrocarbon group, that is, an alkyl group is used. Examples of the alkyl group include a linear alkyl group and a branched alkyl group, and preferably, a linear alkyl group is used. The alkyl group has, for example, 3 or more carbon atoms, and for example, 18 or less carbon atoms. Examples of the linear alkyl group include propyl, butyl, pentyl, hexyl, heptyl, octyl, nonyl, decyl, undecyl, dodecyl, tridecyl, tetradecyl, pentadecyl, hexadecyl, heptadecyl, and octadecyl. As the unsaturated aliphatic hydrocarbon group, alkenyl groups having, for example, 3 or more carbon atoms, preferably, 5 or more carbon atoms, and for example, 18 or less carbon atoms are used. Examples of the alkenyl group include heptadecenyl.

The aliphatic hydrocarbon group (alkyl group or alkenyl group) has preferably 6 or more carbon atoms, more preferably 8 or more carbon atoms, and preferably 14 or less carbon atoms. When the number of carbon atoms of the aliphatic hydrocarbon group exceeds the above-described lower limit, the adhesive strength can be sufficiently improved. When the number of carbon atoms of the aliphatic hydrocarbon group is less than the above-described upper limit, the adhesive strength can be sufficiently improved and the transparency is excellent.

Specific examples of the acyl group include butanoyl (an example of RCO where R is $C_3H_7$), pentanoyl (an example of RCO where R is $C_4H_9$), hexanoyl (an example of RCO where R is $C_5H_{11}$), heptanoyl (an example of RCO where R is $C_6H_{13}$), octanoyl (an example of RCO where R is $C_7H_{15}$), nonanoyl (an example of RCO where R is $C_8H_{17}$), decanoyl (an example of RCO where R is $C_9H_{19}$), lauroyl (i.e., dodecanoyl) (an example of RCO where R is $C_{11}H_{23}$), myristoyl (i.e., tetradecanoyl) (an example of RCO where R is $C_{13}H_{27}$), palmitoyl (i.e., hexadecanoyl) (an example of RCO where R is $C_{15}H_{31}$), stearoyl (i.e., octadecanoyl) (an example of RCO where R is $C_{17}H_{35}$), oleoyl (an example of RCO where R is $C_{17}H_{33}$), and nonadecanoyl (an example of RCO where R is $C_{18}H_{37}$). Preferably, octanoyl, nonanoyl, decanoyl, lauroyl, myristoyl, and palmitoyl are used.

Types, physical properties, and production methods of the $\beta$-1,3-glucan derivative are described in, for example, Japanese Unexamined Patent Publication No. 2018-154723.

The proportion of the $\beta$-1,3-glucan derivative in the solid content of the adhesive composition is, for example, 50% by weight or more, preferably 60% by weight or more, more preferably 70% by weight or more, and for example, 99% by weight or less, preferably 90% by weight or less, more preferably 80% by weight or less.

The $\beta$-1,3-glucan derivative is identified by $^1$H-NMR spectrum and FT-IR spectrum. Details of the identification is described in Japanese Unexamined Patent Publication No. 2018-154723.

[Terpene-based resin]

The terpene-based resin is a tackifier. That is, the terpene-based resin is a component that enhances adhesive strength of the adhesive composition. The adhesive composition of the present invention contains the terpene-based resin as a tackifier. The terpene-based resin can improve the adhesive strength of the adhesive composition and can prevent decrease in transparency.

Examples of the terpene-based resin include terpene resin, hydride of terpene resin, aromatic modified terpene resin, phenolic modified terpene resin, and hydride of phenolic modified terpene resin. These can be used alone or in combination.

As the terpene-based resin, preferably, at least one selected from the group consisting of terpene resin, hydride of terpene resin, and phenolic modified terpene resin is used in view of further enhancing adhesive strength and further enhancing transparency. As the terpene-based resin, more preferably, phenolic modified terpene resin, terpene resin, or hydride of terpene resin is used, even more preferably, terpene resin is used. The phenolic modified terpene resin may be referred to as a terpene-phenol resin.

As the terpene-based resin, preferably, terpene resin and hydride of terpene resin are also used in view of a large proportion of reusable resources. Examples of the terpene resin include $\alpha$-pinene polymer, $\beta$-pinene polymer, and dipentene polymer. The terpene resin may be referred to as a polyterpene resin.

The amount of the terpene-based resin relative to 100 parts by weight of the $\beta$-1,3-glucan derivative is, for example, 5 parts by weight or more, preferably 10 parts by weight or more, and for example, 150 parts by weight or less, preferably 100 parts by weight or less, more preferably 80 parts by weight or less, even more preferably 60 parts by weight or less, particularly preferably 40 parts by weight or less. When the amount of the terpene-based resin relative to 100 parts by weight of the $\beta$-1,3-glucan derivative exceeds the above-described lower limit, an increase in the viscosity of a solution (to be described later) of the adhesive composition can be suppressed, which in turn can prevent an appearance defect of an adhesive layer (to be described later). When the amount of the terpene-based resin relative to 100 parts by weight of the $\beta$-1,3-glucan derivative is less than the above-described upper limit, it is possible to prevent bleed-out of the terpene-based resin from the adhesive layer in a high temperature environment, and in addition, the adhesive strength is further enhanced, and the transparency is further enhanced.

As the terpene-based resin, commercially available products are used.

The terpene-based resin in the adhesive composition is identified by $^1$H-NMR spectrum, FT-IR spectrum, gel permeation chromatography, and/or mass spectrometry.

[Additive]

The adhesive composition may contain an additive at an appropriate ratio. Examples of the additive include other base polymers (acrylic resin), other tackifiers (rosin-based resin and petroleum-based resin), viscosity modifiers, leveling agents, plasticizers, fillers, stabilizers, preservative agents, and antioxidants.

To produce the adhesive composition, the $\beta$-1,3-glucan derivative, the terpene-based resin, and as necessary, an additive are blended and mixed. Alternatively, the above-described components can also be dissolved in an organic solvent to prepare a solution containing the adhesive composition. The solution may be referred to as a "solution of the adhesive composition". The organic solvent includes a low polar solvent and a high polar solvent.

Examples of the low polar solvent include an aromatic compound, an alicyclic compound, and a chain saturated hydrocarbon compound. Examples of the aromatic compound include toluene. Examples of the alicyclic compound include cyclohexane and methylcyclohexane. Examples of the chain saturated hydrocarbon compound include pentane, hexane, and heptane.

Examples of the high polar solvent include ketone, ester, and alcohol. Examples of the ketone include methyl ethyl ketone. Examples of the ester include ethyl acetate. Examples of the alcohol include methanol and ethanol.

These organic solvents can be used alone or in combination. Preferably, a low polar solvent is used alone, and a low polar solvent and a high polar solvent are used in combination.

The $\beta$-1,3-glucan derivative and the terpene-based resin can also be dissolved in water using an emulsifier and/or a dispersant to prepare an aqueous dispersion containing the adhesive composition. The aqueous dispersion may be referred to as an "aqueous dispersion of the adhesive composition".

The solid content in the solution of the adhesive composition or the aqueous dispersion of the adhesive composition is, for example, 1% by weight or more, preferably 10% by weight or more, and for example, 50% by weight or less, preferably 40% by weight or less.

The $\beta$-1,3-glucan derivative and the terpene-based resin can also be mixed using a kneader or the like to prepare a hot-melt resin of the adhesive composition. The hot-melt resin of the adhesive composition may be simply referred to as a "hot-melt resin".

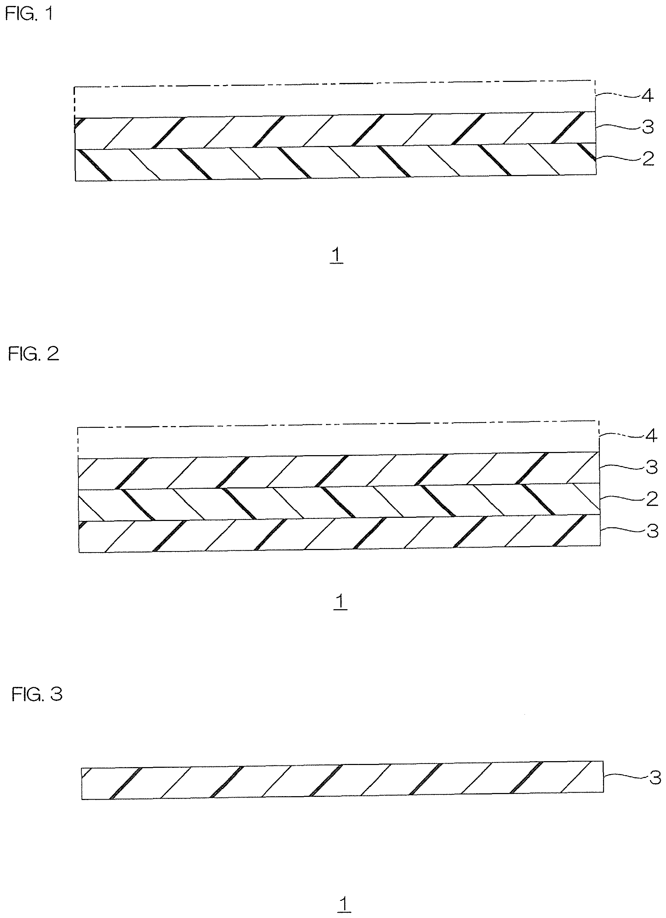

As shown in FIG. 1, a surface of a base material sheet 2 is coated with the solution of the adhesive composition or the aqueous dispersion of the adhesive composition, and thereafter dried by heating to form an adhesive layer 3. Alternatively, the adhesive layer 3 is formed by hot-melt coating the surface of the base material sheet 2 with the above-described hot-melt resin, and thereafter cooling the hot-melt resin. In this manner, an adhesive tape 1 having the base material sheet 2 and the adhesive layer 3 can be produced.

Examples of a material of the base material sheet 2 include resin. Examples of the resin include polyester. The base material sheet 2 has a thickness of 0.5 $\mu$m or more, and for example, 900 $\mu$m or less.

The adhesive layer 3 has a thickness of, for example, 1 $\mu$m or more, and for example, 1000 $\mu$m or less. The adhesive tape 1 has a thickness of, for example, 2 $\mu$m or more, and for example, 1100 $\mu$m or less.

Further, as shown in FIG. 2, the adhesive tape 1 can also include the base material sheet 2, and the adhesive layers 3 disposed on front and back surfaces of the base material sheet 2.

Alternatively, as shown in FIG. 3, a base material-less type adhesive tape 1 including the adhesive layer 3 alone without using the base material sheet 2 can also be obtained. The adhesive tape 1 is formed from the adhesive layer 3 alone.

[Adhesive strength]

The adhesive strength of the adhesive layer 3 to a stainless steel plate at 23°C and 50% RH is, for example, 1 N/20 mm or more, preferably 2 N/20 mm or more, more preferably 3 N/20 mm or more, and for example, 20 N/20 mm or less. A measurement method of the adhesive strength of the adhesive layer 3 to the stainless steel plate is described in detail in Example below.

The adhesive layer 3 has a haze of, for example, 20% or less, preferably 10% or less, more preferably 5.0% or less, even more preferably 2.0% or less, particularly preferably 1.0% or less, most preferably 0.5% or less. A measurement method of the haze of the adhesive layer 3 is described in detail in Example below. A low haze means excellent transparency. When the haze of the adhesive layer 3 is less than the above-described upper limit, the adhesive layer 3 is suitably used for optical applications. The optical applications include, for example, transparent protective films.

[Effects of adhesive composition and adhesive tape]

The adhesive composition contains a terpene-based resin as an essential tackifier. Therefore, the adhesive composition and the adhesive tape have high adhesive strength and excellent transparency. For this reason, the adhesive composition and the adhesive tape are suitably used for optical applications including transparent protective films.

In contrast to this, when the adhesive composition contains a rosin-based resin as an essential tackifier, the haze increases. Therefore, the transparency decreases. When the adhesive composition contains a petroleum-based resin as an essential tackifier, the adhesion is not sufficiently improved, and furthermore, the haze increases and the transparency decreases.

[Modified examples of adhesive tape]

In the modified example, the same reference numerals are provided for members and steps corresponding to each of those in one embodiment, and their detailed description is omitted. Further, the modified example can achieve the same function and effect as that of one embodiment unless otherwise specified. Furthermore, one embodiment and the modified examples thereof can be appropriately used in combination.

As shown in phantom lines in FIGS. 1 and 2, the adhesive tape 1 of the modified example further includes a release sheet 4 disposed on the surface of the adhesive layer 3. Example

Specific numerical values such as blending ratios (content), physical property values, and parameters used in the following description can be replaced with the upper limit value (numeral values defined with "or less" or "less than") or the lower limit value (numeral values defined with "or more" or "more than") of the corresponding blending ratios (content), physical property values, and parameters described in the above-mentioned "DESCRIPTION OF THE EMBODIMENTS". The "parts" and "%" are based on weight unless otherwise specified in the following description.

[Synthesis Examples of β-1,3-glucan derivative]

Synthesis Example 1

[Synthesis of myristoylated β-1,3-glucan (RCO where R (aliphatic hydrocarbon group) has 13 carbon atoms)]

To a reaction vessel equipped with a condenser tube, a nitrogen inlet tube, a thermometer, and a stirrer, 13.3 g of β-1,3-glucan (Euglena Co., Ltd.: 82.03 mmol of glucose part) and 1000 mL of dehydrated pyridine (FUJIFILM Wako Pure Chemical Corporation) were added, and the mixture was stirred for 0.5 hours at a temperature of 92°C under a nitrogen atmosphere. To the obtained pyridine solution, 133.05 mL of myristoyl chloride (492.2 mmol: FUJIFILM Wako Pure Chemical Corporation) was added, and the mixture was heated to 92°C and then stirred for 1 hour. In this manner, a reaction mixture was prepared.

Thereafter, a solid intermediate was obtained from the reaction mixture. First, 1 hour after the start of the reaction, 2000 mL of methanol was added to the reaction mixture and cooled to room temperature. Then, a solid thus formed was taken out and then dissolved in 600 mL of toluene to prepare a toluene solution. The toluene solution was poured into 2000 mL of methanol under stirring to give a solid. By repeating the process of dissolving the solid in toluene and pouring the toluene solution into methanol 3 times, washing was performed to give a solid. The solid was dried at 60°C for 4 hours under reduced pressure. In this manner, a myristoylated β-1,3-glucan was obtained. That is, the myristoylated β-1,3-glucan was a β-1,3-glucan derivative obtained by introducing myristoyl into P-1,3-glucan.

Synthesis Example 2

[Synthesis of palmitoylated β-1,3-glucan (RCO where R (aliphatic hydrocarbon group) has 15 carbon atoms)]

In the same manner as in Synthesis Example 1, a palmitoylated β-1,3-glucan was obtained. However, 133.05 mL (492.2 mmol) of myristoyl chloride was changed to 150.21 mL of palmitoyl chloride (492.2 mmol: FUJIFILM Wako Pure Chemical Corporation). That is, the palmitoylated β-1,3-glucan was a β-1,3-glucan derivative obtained by introducing palmitoyl into β-1,3-glucan.

Synthesis Example 3

[Synthesis of lauroylated β-1,3-glucan (RCO where R (aliphatic hydrocarbon group) has 11 carbon atoms)]

In the same manner as in Synthesis Example 1, a lauroylated β-1,3-glucan was obtained. However, 133.05 mL (492.2 mmol) of myristoyl chloride was changed to 113.81 mL of lauroyl chloride (492.2 mmol: FUJIFILM Wako Pure Chemical Corporation). That is, the lauroylated β-1,3-glucan was a β-1,3-glucan derivative obtained by introducing lauroyl into β-1,3-glucan.

Synthesis Example 4

[Synthesis of octanoylated β-1,3-glucan (RCO where R (aliphatic hydrocarbon group) has 7 carbon atoms)]

In the same manner as in Synthesis Example 1, an octanoylated β-1,3-glucan was obtained. However, 133.05 mL (492.2 mmol) of myristoyl chloride was changed to 84.18 mL of octanoyl chloride (492.2 mmol: FUJIFILM Wako Pure Chemical Corporation). That is, the octanoylated β-1,3-glucan was a β-1,3-glucan derivative obtained by introducing octanoyl into β-1,3-glucan.

Synthesis Example 5

[Synthesis of butanoylated β-1,3-glucan (RCO where R (aliphatic hydrocarbon group) has 3 carbon atoms)]

In the same manner as in Synthesis Example 1, a butanoylated β-1,3-glucan was obtained. However, 133.05 mL (492.2 mmol) of myristoyl chloride was changed to 50.98 mL of butanoyl chloride (492.2 mmol: FUJIFILM Wako Pure Chemical Corporation). That is, the butanoylated β-1,3-glucan was a β-1,3-glucan derivative obtained by introducing butanoyl into β-1,3-glucan.

Synthesis Example 6

[Synthesis of oleoylated β-1,3-glucan (RCO where R (aliphatic hydrocarbon group) has 17 carbon atoms)]

In the same manner as in Synthesis Example 1, an oleoylated β-1,3-glucan was obtained. However, 133.05 mL (492.2 mmol) of myristoyl chloride was changed to 162.38 mL of oleoyl chloride (492.2 mmol: FUJIFILM Wako Pure Chemical Corporation). That is, the oleoylated β-1,3-glucan was a β-1,3-glucan derivative obtained by introducing oleoyl into β-1,3-glucan.

[Production of adhesive tape]

[Example 1]

A toluene solution (solids concentration of 10% by weight) of myristoylated β-1,3-glucan was prepared.
Separately, a toluene solution (solids concentration of 50% by weight) of YS RESIN TO-125 (Yasuhara Chemical Co., Ltd., aromatic modified terpene resin), which is a terpene-based resin, was prepared.
Then, the toluene solution of myristoylated β-1,3-glucan and the toluene solution of YS RESIN TO-125 were blended so that the YS RESIN TO-125 amounted to 30 parts by weight relative to 100 parts by weight of the myristoylated β-1,3-glucan, and the mixture was then stirred. In this manner, a toluene solution of an adhesive composition was obtained.
The toluene solution of the adhesive composition was applied to a surface of a polyester base material (Toray Industries, Inc.: Lumirror S-10, thickness 25 μm) as a base material sheet 2 using an applicator (Tester Sangyo Co., Ltd.), and dried at 50°C for 5 minutes and then at 120°C for 5 minutes. In this manner, an adhesive tape 1 including the base material sheet 2 and an adhesive layer 3 having a thickness of 50 μm was produced.

[Examples 2 to 4 and Comparative Examples 1 and 2]

The adhesive composition and the adhesive tape 1 were produced in the same manner as in Example 1. However, the type of the tackifier was changed as follows. The changes are also shown in Table 1.
In Example 2, YS POLYSTER T-130 (Yasuhara Chemical Co., Ltd., phenolic modified terpene resin) was used in place of YS RESIN TO-125 (aromatic modified terpene resin).
In Example 3, YS RESIN PX-1250 (Yasuhara Chemical Co., Ltd., terpene resin) was used in place of YS RESIN TO-125 (aromatic modified terpene resin).
In Example 4, YS RESIN P-130 (Yasuhara Chemical Co., Ltd., hydride of terpene resin) was used in place of YS RESIN TO-125 (aromatic modified terpene resin).
In Comparative Example 1, SUPER ESTER A-125 (Arakawa Chemical Industries, rosin-based resin) was used in place of YS RESIN TO-125 (aromatic modified terpene resin).
In Comparative Example 2, ARKON M-135 (Arakawa Chemical Industries, petroleum-based resin) was used in place of YS RESIN TO-125 (aromatic modified terpene resin).

[Examples 5 to 9]

The adhesive composition and the adhesive tape 1 were produced in the same manner as in Example 3. However, the type of carbon atom in the R (aliphatic hydrocarbon group) of the acyl (RCO) introduced into the β-1,3-glucan derivative was changed as follows. The changes are also shown in Table 2.
In Example 5, butanoylated β-1,3-glucan (RCO where R (aliphatic hydrocarbon group) has 3 carbon atoms) was used in place of the myristoylated β-1,3-glucan (RCO where R (aliphatic hydrocarbon group) has 13 carbon atoms).
In Example 6, octanoylated β-1,3-glucan (RCO where R (aliphatic hydrocarbon group) has 7 carbon atoms) was used in place of the myristoylated β-1,3-glucan (RCO where R (aliphatic hydrocarbon group) has 13 carbon atoms).
In Example 7, lauroylated β-1,3-glucan (RCO where R (aliphatic hydrocarbon group) has 11 carbon atoms) was used in place of the myristoylated β-1,3-glucan (RCO where R (aliphatic hydrocarbon group) has 13 carbon atoms).
In Example 8, palmitoylated β-1,3-glucan (RCO where R (aliphatic hydrocarbon group) has 15 carbon atoms) was used in place of the myristoylated β-1,3-glucan (RCO where R (aliphatic hydrocarbon group) has 13 carbon atoms).
In Example 9, oleoylated β-1,3-glucan (RCO where R (aliphatic hydrocarbon group) has 17 carbon atoms) was used in place of the myristoylated β-1,3-glucan (RCO where R (aliphatic hydrocarbon group) has 13 carbon atoms).

[Examples 10 to 16]

The adhesive composition and the adhesive tape 1 were produced in the same manner as in Example 3. However, the amount of the YS RESIN PX-1250 relative to 100 parts by weight of the myristoylated β-1,3-glucan was changed as follows. The changes are also shown in Table 3.
In Example 10, the amount of the YS RESIN PX-1250 relative to 100 parts by weight of the myristoylated β-1,3-glucan was changed from 30 parts by weight to 5 parts by weight.
In Example 11, the amount of the YS RESIN PX-1250 relative to 100 parts by weight of the myristoylated β-1,3-glucan was changed from 30 parts by weight to 10 parts by weight.
In Example 12, the amount of the YS RESIN PX-1250 relative to 100 parts by weight of the myristoylated β-1,3-glucan was changed from 30 parts by weight to 50 parts by weight.
In Example 13, the amount of the YS RESIN PX-1250 relative to 100 parts by weight of the myristoylated β-1,3-glucan was changed from 30 parts by weight to 70 parts by weight.
In Example 14, the amount of the YS RESIN PX-1250 relative to 100 parts by weight of the myristoylated β-1,3-glucan was changed from 30 parts by weight to 90 parts by weight.
In Example 15, the amount of the YS RESIN PX-1250 relative to 100 parts by weight of the myristoylated β-1,3-glucan was changed from 30 parts by weight to 120 parts by weight.
In Example 16, the amount of the YS RESIN PX-1250 relative to 100 parts by weight of the myristoylated β-1,3-glucan was changed from 30 parts by weight to 150 parts by weight.

[Evaluation]

The adhesive layers of Examples and Comparative Examples were evaluated with respect to the following items. The results are shown in Tables 1 to 3. The results of Example 3 were given in Tables 1 to 3 for easy comparison to those of the other Examples.

[Adhesive strength]

The adhesive tape 1 was cut into a size of 20 mm wide and 70 mm long to produce a sample.

The adhesive layer 3 of the sample was pressure-bonded to a stainless steel plate by reciprocating a 2 kg roller in an environment of 23°C and 50% RH. Further, the sample was allowed to stand for 30 minutes in the same environment. Thereafter, the "adhesive strength" was obtained by measuring a peel force (N/20 mm) when the sample was peeled off at a peel rate of 300 mm/min and a peel angle of 180° using a universal tensile testing machine, Autograph AG-IS (Shimadzu Corporation). The adhesive strength was measured in an environment of 23°C and 50% RH.

[Haze]

The adhesive tape 1 was cut into a size of 50 mm wide and 50 mm long to prepare a sample.

Using a haze meter "HM150" manufactured by Murakami Color Research Laboratory, a haze value (H1) of the sample was measured in accordance with JIS K 7136 (2000).

Separately, only the base material sheet 2 was cut into a size of 50 mm × 50 mm, and a haze value (H2) was measured by the same method as above.

Thereafter, a haze value (H3) of the adhesive layer 3 was determined by the following formula:

$$H3 = H1 - H2$$

[Table 1]

TABLE 1

| | | Example 1 | Example 2 | Example 3 | Example 4 | Comparative Example 1 | Comparative Example 2 |
|---|---|---|---|---|---|---|---|
| β-1,3-glucan derivative | No. of carbon atoms in R of RCO (acyl group) | 13 | 13 | 13 | 13 | 13 | 13 |
| Tackifier | Type | Terpene-based resin | Terpene-based resin | Terpene-based resin | Terpene-based resin | Rosin-based resin | Petroleum-based resin |
| | | Aromatic modified terpene resin | Phenolic modified terpene resin | Terpene resin | Hydride ofterpene resin | | |
| | | YS RESIN TO-125 | YS RESIN TO-130 | YS RESIN PX-1250 | YS RESIN P-130 | SUPER ESTER A-125 | ARKON M-135 |
| | Amount (parts by weight) relative to 100 parts by weight of β-1,3-glucan derivative | 30 | 30 | 30 | 30 | 30 | 30 |

(continued)

| Evaluation | Adhesive strength to stainless steel plate (N/20 mm) | Example 1 | Example 2 | Example 3 | Example 4 | Comparative Example 1 | Comparative Example 2 |
|---|---|---|---|---|---|---|---|
| | | 2.9 | 3.2 | 3.3 | 3.3 | 2.8 | 2.5 |
| | Haze (H3) of adhesive layer (%) | 0.2 | 0.0 | 0.0 | 0.6 | 28 | 43 |

[Table 2]

TABLE 2

| | | Example 5 | Example 6 | Example 7 | Example 1 | Example 8 | Example 9 |
|---|---|---|---|---|---|---|---|
| P-1,3-glucan derivative | No. of carbon atoms in R of RCO (acyl group) | 3 | 7 | 11 | 13 | 15 | 17 |
| Tackifier | Type | Terpene-based resin | Terpene-based resin | Terpene-based resin | Terpene-based resin | Terpene-based resin | Terpene-based resin |
| | | Terpene resin | Terpene resin | Terpene resin | Aromatic modified terpene resin | Terpene resin | Terpene resin |
| | | YS RESIN PX-1250 | YS RESIN PX-1250 | YS RESIN PX-1250 | YS RESIN TO-125 | YS RESIN PX-1250 | YS RESIN PX-1250 |
| | Amount (parts by weight) relative to 100 parts by weight of β-1,3-glucan derivative | 30 | 30 | 30 | 30 | 30 | 30 |
| Evaluation | Adhesive strength to stainless steel plate (N/20 mm) | 0.03 | 1.5 | 4.7 | 2.9 | 1.8 | 0.6 |
| | Haze (H3) of adhesive layer (%) | 76.8 | 0.1 | 0.3 | 0.2 | 4.5 | 66.2 |

[Table 3]

TABLE3

| | | Example 10 | Example 11 | Example 3 | Example 12 | Example 13 | Example 14 | Example 15 | Example 16 |
|---|---|---|---|---|---|---|---|---|---|
| β-1,3-glucan derivative | No. of carbon atoms in R of RCO (acyl group) | 13 | 13 | 13 | 13 | 13 | 13 | 13 | 13 |
| Tackifier | Type | Terpene-based resin | Terpene-based resin | Terpene-based resin | Terpene-based resin | Terpene-based resin | Terpene-based resin | Terpene-based resin | Terpene-based resin |
| | | Terpene resin | Terpene resin | Terpene resin | Terpene resin | Terpene resin | Terpene resin | Terpene resin | Terpene resin |
| | | YS RESIN PX-1250 | YS RESIN PX-1250 | YS RESIN PX-1250 | YS RESIN PX-1250 | YS RESIN PX-1250 | YS RESIN PX-1250 | YS RESIN PX-1250 | YS RESIN PX-1250 |
| | Amount (parts by weight) relative to 100 parts by weight of β-1,3-glucan derivative | 5 | 10 | 30 | 50 | 70 | 90 | 120 | 150 |
| Evaluation | Adhesive strength to stainless steel plate (N/20 mm) | 1.4 | 2.8 | 3.3 | 5.0 | 7.7 | 9.2 | 0.4 | 0.04 |
| | Haze (H3) of adhesive layer (%) | 0.2 | 0.2 | 0.0 | 0.1 | 0.7 | 1.0 | 2.1 | 3.3 |

EP 4 257 649 A1

10

While the illustrative embodiments of the present invention are provided in the above description, such is for illustrative purpose only and it is not to be construed restrictively. Modification and variation of the present invention that will be obvious to those skilled in the art is to be covered by the following claims.

Industrial Applicability

The adhesive composition is used as a material for an adhesive layer of an adhesive tape.

Description of Reference Numerals

1   adhesive tape
3   adhesive layer

**Claims**

1.   An adhesive composition, comprising

    a β-1,3-glucan derivative in which an acyl group is incorporated into β-1,3-glucan; and
    a terpene-based resin.

2.   The adhesive composition according to claim 1, wherein the terpene-based resin is at least one selected from the group consisting of terpene resin, hydride of terpene resin, and phenolic modified terpene resin.

3.   The adhesive composition according to claim 1 or 2, wherein

    the acyl group is represented by RCO-,
    where R is an aliphatic hydrocarbon group having 8 or more and 14 or less carbon atoms.

4.   The adhesive composition according to any one of claims 1 to 3, wherein an amount of the terpene-based resin relative to 100 parts by weight of the β-1,3-glucan derivative is 10 parts by weight or more and 100 parts by weight or less.

5.   An adhesive tape, comprising an adhesive layer made of an adhesive composition according to any one of claims 1 to 4.

FIG. 1

1

FIG. 2

1

FIG. 3

1

## INTERNATIONAL SEARCH REPORT

| International application No. |
| --- |
| **PCT/JP2021/042591** |

### A. CLASSIFICATION OF SUBJECT MATTER

*C09J 11/08*(2006.01)i; *C09J 105/00*(2006.01)i; *C09J 7/38*(2018.01)i
FI:   C09J105/00; C09J7/38; C09J11/08

According to International Patent Classification (IPC) or to both national classification and IPC

### B. FIELDS SEARCHED

Minimum documentation searched (classification system followed by classification symbols)
   C09J1/00-201/10

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-154723 A (AIST) 04 October 2018 (2018-10-04) <br> claims 1-3, paragraphs [0009], [0011]-[0021], [0029]-[0031], [0037]-[0040], [0045], [0053]-[0074], examples 1-14 | 1-5 |
| Y | WO 2016/027767 A1 (KURARAY CO., LTD.) 25 February 2016 (2016-02-25) <br> claims 1, 3, 6-9, paragraphs [0038]-[0049], examples | 1-5 |
| Y | JP 2020-176202 A (TOYO INK SC HOLDINGS CO LTD) 29 October 2020 (2020-10-29) <br> claims 1-4, 11, paragraphs [0059]-[0067], examples | 1-5 |
| Y | JP 2013-194108 A (TOYO INK SC HOLDINGS CO LTD) 30 September 2013 (2013-09-30) <br> claims 1-2, paragraphs [0027]-[0029], examples | 1-5 |
| Y | JP 2016-524002 A (BOSTIK, INC) 12 August 2016 (2016-08-12) <br> claims 1, 7-11, paragraphs [0031]-[0035], examples | 1-5 |
| Y | JP 2013-032450 A (KANEKA CORP) 14 February 2013 (2013-02-14) <br> claims 1, 4-5, paragraphs [0032]-[0033], examples | 1-5 |

☑ Further documents are listed in the continuation of Box C.     ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br><br> **12 January 2022** | Date of mailing of the international search report <br><br> **25 January 2022** |
| Name and mailing address of the ISA/JP <br><br> **Japan Patent Office (ISA/JP)** <br> **3-4-3 Kasumigaseki, Chiyoda-ku, Tokyo 100-8915** <br> **Japan** | Authorized officer <br><br><br><br> Telephone No. |

Form PCT/ISA/210 (second sheet) (January 2015)

**INTERNATIONAL SEARCH REPORT**

| International application No. |
| --- |
| **PCT/JP2021/042591** |

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2014/136765 A1 (NITTO DENKO CORPORATION) 12 September 2014 (2014-09-12) claims 1, 5-6, 11-12, paragraphs [0060]-[0066], examples | 1-5 |

Form PCT/ISA/210 (second sheet) (January 2015)

**INTERNATIONAL SEARCH REPORT**
Information on patent family members

International application No.

**PCT/JP2021/042591**

| Patent document cited in search report | | | Publication date (day/month/year) | Patent family member(s) | | | Publication date (day/month/year) |
|---|---|---|---|---|---|---|---|
| JP | 2018-154723 | A | 04 October 2018 | (Family: none) | | | |
| WO | 2016/027767 | A1 | 25 February 2016 | US 2017/0233619 A1 claims 1, 3, 6-9, paragraphs [0062]-[0073], examples EP 3184597 A1 CA 2958582 A1 KR 10-2017-0044101 A CN 106661410 A | | | |
| JP | 2020-176202 | A | 29 October 2020 | (Family: none) | | | |
| JP | 2013-194108 | A | 30 September 2013 | (Family: none) | | | |
| JP | 2016-524002 | A | 12 August 2016 | US 2014/0350155 A1 claims 1, 7-11, paragraphs [0031]-[0041], examples US 2016/0230055 A1 WO 2014/190098 A1 CN 105308141 A | | | |
| JP | 2013-032450 | A | 14 February 2013 | (Family: none) | | | |
| WO | 2014/136765 | A1 | 12 September 2014 | US 2016/0017193 A1 claims 1, 5-6, 11-12, paragraphs [0067]-[0074], examples JP 2014-169419 A JP 2014-169420 A CN 105121578 A KR 10-2015-0126589 A | | | |

Form PCT/ISA/210 (patent family annex) (January 2015)

**REFERENCES CITED IN THE DESCRIPTION**

**Patent documents cited in the description**

- JP 2018154723 A